# EUROPÄISCHE PATENTSCHRIFT

(11) **EP 3 215 811 B1**
(45) Veröffentlichungstag und Bekanntmachung des Hinweises auf die Patenterteilung: **20.02.2019**
(21) Anmeldenummer: 15790837.7
(22) Anmeldetag: 31.10.2015
(51) Int. Cl.: G01D 5/20, H01F 7/18, F01L 9/04

(54) **BESTIMMUNG EINER POSITION EINES BEWEGLICHEN ELEMENTES EINES FÜR EIN KRAFTFAHRZEUG BESTIMMTEN LINEARAKTUATORS**
DETERMINING A POSITION OF A MOVABLE ELEMENT OF A LINEAR ACTUATOR WHICH IS INTENDED FOR A MOTOR VEHICLE
DÉTERMINATION D'UNE POSITION D'UN ÉLÉMENT MOBILE D'UN ACTIONNEUR LINÉAIRE DESTINÉ À UN VÉHICULE AUTOMOBILE

(30) Priorität: 03.11.2014 DE 102014016189
(43) Veröffentlichungstag der Anmeldung: 13.09.2017
(73) Patentinhaber: Audi AG, 85045 Ingolstadt (DE)
(72) Erfinder: VON DAHL, Andreas, 85051 Ingolstadt (DE); SCHLOCKERMANN, Carl, Johannes, 81669 München (DE)
(74) Vertreter: Askaryar, Jama
(86) Internationale Anmeldenummer: PCT/EP2015/002187
(87) Internationale Veröffentlichungsnummer: WO 2016/070982

(56) Entgegenhaltungen:
- EP-A1- 2 927 531
- WO-A1-2014/088001
- DE-A1-102010 032 443
- US-A- 5 583 434

## Beschreibung

Die Erfindung betrifft ein Verfahren zum Bestimmen einer Position eines beweglichen Elementes eines für ein Kraftfahrzeug bestimmten Linearaktuators, wobei das bewegliche Element mittels eines Magnetfelds einer Spule des Linearaktuators bewegbar ist und das Bestimmen der Position des beweglichen Elements basierend auf einer Veränderung einer Impedanz der Spule erfolgt. Die Erfindung betrifft auch einen für ein Kraftfahrzeug bestimmten Linearaktuator mit einer elektrischen Spule, mit einem beweglichen Element, welches mittels eines Magnetfelds der Spule des Linearaktuators bewegbar ist und mit einer Steuereinheit, welche ausgelegt ist, eine Position des beweglichen Elements basierend auf einer Veränderung einer Impedanz der Spule zu bestimmen.
Im Allgemeinen lässt sich aus einer Kenntnis über einen Spulenstrom, welcher einem Linearaktuator, beispielsweise einem Haltemagneten, zum Bewegen und/oder Halten eines beweglichen Elementes, beispielsweise einem Anker des Haltemagneten, zugeführt wird, und einer dazu proportionalen Kraft des Linearaktuators ein Erreichen einer vorgegebenen Position durch das bewegliche Element ableiten. Wird die Beweglichkeit des beweglichen Elementes jedoch noch durch weitere Faktoren, beispielsweise durch eine temperaturabhängige Viskosität eines Öles, in welchem das bewegliche Element sich bewegt, beeinflusst, so müsste die Kraft auf den Linearaktuator und damit der Spulenstrom an die Einflüsse der weiteren Faktoren angepasst werden, um dies zu erreichen. Beispielsweise könnte der Spulenstrom temperaturabhängig geregelt werden. Eine andere Möglichkeit besteht darin, die Position des beweglichen Elementes unabhängig von dem Spulenstrom, der dem Bewegen und/oder Halten dient, zu bestimmen. Dies kann beispielsweise über zusätzliche Sensoren erfolgen. Es existieren jedoch auch Verfahren, die eine Ankerposition eines magnetischen Aktuators über eine Veränderung der Impedanz oder Induktivität der Spule messen, siehe z.B. US 5 583 434 A und DE 10 2010 032443 A1. Diese Verfahren basieren dabei entweder auf dem Erfassen einer Zeitkonstante eines Anstiegs oder Abfalls des Spulenstroms oder, falls der Spulenstrom mittels einer Pulsweitenmodulation gesteuert wird, auf ein Messen der Induktivität über die Amplitude des Spulenstroms bei der Frequenz der Pulsweitenmodulation.

Aus der Druckschrift WO 2014/088001 A1 ist eine elektrische Parkbremse bekannt, die einen Linearaktor als Verriegelungselement aufweist. Ein Ansteuersignal einer Spule des Linearaktors wird mit einer Wechselspannung überlagert. Eine Verschiebung einer darauf basierenden Resonanzfrequenz führt zu einer Position des Linearaktors.
Es ist Aufgabe der vorliegenden Erfindung, das Bestimmen einer Position eines beweglichen Elementes eines für ein Kraftfahrzeug bestimmten Linearaktuators zu vereinfachen. Diese Aufgabe wird von den Gegenständen der beiden unabhängigen Patentansprüche gelöst. Vorteilhafte Ausführungsformen ergeben sich aus den abhängigen Patentansprüchen, den Figuren und der Figurenbeschreibung.
Die Erfindung umfasst ein Verfahren zum Bestimmen einer Position eines beweglichen Elementes eines für ein Kraftfahrzeug bestimmten Linearaktuators. Dabei ist das bewegliche Element mittels eines Magnetfelds einer elektrischen Spule des Linearaktuators bewegbar. Es kann sich bei dem Linearaktuator und dem beweglichen Element beispielsweise um einen Haltemagneten und einen zugeordneten Anker handeln. Das Bestimmen der Position des beweglichen Elementes relativ zu der Spule, erfolgt basierend auf einer Veränderung einer Impedanz oder Induktivität oder einer Admittanz der Spule. Linearaktuator und bewegliches Element sind hier also derart gestaltet, dass ein Verändern der Position des beweglichen Elementes die Impedanz oder Admittanz der Spule verändert. Impedanz und Admittanz sind im Rahmen dieser Erfindung äquivalent. Im Folgenden umfasst der Begriff der Impedanz also sowohl Impedanz als auch Admittanz. Dies kann beispielsweise über einen innerhalb der Spule angeordneten variablen Spalt aus einem Material mit einer von dem sonstigen Material in dem magnetischen Kreis der Spule abweichenden Permeabilität erfolgen, welcher seine Größenabmessung in Abhängigkeit der Position des beweglichen Elementes relativ zu oder in der Spule verändert. Bei den Materialien für den Spalt, mit welchen dieser gefüllt ist, kann es sich um Materialien wie Luft, Öl, Wasser oder dergleichen handeln. Um das Bestimmen der Position zu vereinfachen, wird ein der Spule für ein Bewegen und/oder Halten des beweglichen Elementes zugeführter Spulenstrom zunächst mit einer elektrischen Wechselgröße einer konstanten vorbestimmten Frequenz moduliert. Das Modulieren kann hier einem Überlagern oder Beaufschlagen einer für den Spulenstrom ursächlichen Spannung mit einer Wechselspannung, welche dann der elektrischen Wechselgröße entspricht, erfolgen. In einem nächsten Schritt wird die Impedanz bei der vorbestimmten Frequenz durch ein Messen einer weiteren Größe, insbesondere einer weiteren elektrischen Größe, ermittelt.

Es kann also zusätzlich zu dem statischen Spulenstrom das System mit einer elektrischen Wechselgröße, insbesondere einer Spannung U oder einem Strom I, beaufschlagt werden. Die elektrische Antwort des Spulensystems gemäß U/ kompl{Z}=I bei der vorbestimmten Frequenz und ggf. deren Oberwellen wird in geeigneter Form gemessen und, z.B. durch eine Demodulation, in die weitere Größe überführt, die Änderungen der Impedanz Z wiederspiegelt. Bei der weiteren Größe kann es sich um eine elektrische Größe handeln oder um eine andere Größe, beispielsweise bei einer digital in einem Prozessor durchgeführten Demodulation um eine prozessorinterne Variable. Falls es sich bei der Wechselgröße der vorbestimmen Frequenz um eine Wechselspannung handelt, kann es sich beispielsweise bei der weiteren Größe um eine Amplitude des zu der Wechselspannung der vorbestimmen Frequenz gehörigen Anteils einer zu dem Spulenstrom proportionalen Spannung handeln.

Schließlich wird aus der ermittelten Impedanz, welche bei der vorgegebenen Frequenz vorliegt, die Position des beweglichen Elementes bestimmt. Dies erfolgt beispielsweise durch ein Vergleichen der ermittelten Impedanz mit einem Vergleichswert, welcher insbesondere einer bekannte Position des beweglichen Elementes entspricht. Alternativ kann über eine Bestimmung einer Übertragungsfunktion zwischen Ankerposition und der weiteren Größe die Position linear erfasst werden.

Das hat zunächst den Vorteil, dass zum Bestimmen der Position des beweglichen Elementes keine zusätzlichen Sensoren erforderlich sind. Das Verfahren ist außerdem schaltungstechnisch sehr einfach realisierbar, erfordert nur einen geringen Rechenaufwand und stellt geringe Ansprüche an die Signalverarbeitung und Signalakquisition. Es kann so mit üblicher, im Allgemeinen bereits für Linearaktuatoren verwendeten und gegebenenfalls vorliegenden oder bereits im Linearaktuator integrierten Hardwarekomponenten, realisiert werden. Überdies erfordert das Verfahren keine spezielle Geometrie des Linearaktuators. Teure, im Hinblick auf magnetische Eigenschaften optimierte Materialien, sind nicht erforderlich. Schließlich ist der zu Grunde liegende Effekt sehr ausgeprägt, so dass das resultierende Signal, vorliegend eine Veränderung der Impedanz bei einer vorbestimmten Frequenz, messtechnisch gut zugänglich ist. Das Bestimmen der Position ist somit einfacher als mit bisher bekannten Verfahren zu realisieren.

In einer bevorzugten Ausführungsform ist vorgesehen, dass der Linearaktuator als Verriegelungseinrichtung mit dem beweglichen Element als Verriegelungselement verwendet wird. Insbesondere kann dies als Teil einer Parksperre eines Kraftfahrzeuggetriebes erfolgen. Das hat den Vorteil, dass in besonders einfacher Weise eine Verriegelungseinrichtung realisiert wird, welche erhöhten Sicherheitsanforderungen entspricht, da die Position des beweglichen Elementes einfach und auch unter Einfluss weiterer, schwer kontrollierbarer Einflüsse überprüft werden kann. Dies ist gerade bei einer Parksperre eines Kraftfahrzeuggetriebes wünschenswert, da dort einerseits eine zuverlässige Verriegelung unabdinglich ist, andererseits über eine sich verändernde Viskosität des Getriebeöls in Abhängigkeit von Temperatur, Verschleiß und weiteren Faktoren nicht kontrollierbare Einflüsse auf die Verriegelungseinrichtung wirken.

In einer weiteren Ausführungsform ist vorgesehen, dass die vorbestimmte Frequenz in Abhängigkeit von der konkreten Ausführungsform des Linearaktuators, also insbesondere der Spule und des der Spule zugeordneten magnetischen Kreises, vorgegeben wird. Hier spielen die Geometrie des Linearaktuators, also der Spule und des magnetischen Kreises, die verwendeten Materialien in dem magnetischen Kreis und deren magnetische Eigenschaften und in Folge die auftretenden magnetischen Verluste eine Rolle für die geeignete Wahl der vorbestimmten Frequenz. Um die vorbestimmte Frequenz vorzugeben, wird hier der Unterschied der Impedanz der Spule für unterschiedliche Positionen des beweglichen Elementes bei verschiedenen Frequenzen bestimmt und eine Frequenz mit dem größtmöglichen Unterschied der Impedanz, also dem größtmöglichen Impedanzkontrast, in den unterschiedlichen Positionen des beweglichen Elementes vorgegeben. Das Bestimmen dieses Unterschieds kann hier empirisch durch ein Messen erfolgen oder aber auch theoretisch durch ein Berechnen oder ein Simulieren. Dabei können insbesondere weitere Bedingungen, beispielsweise Beschränkungen von in einer zugeordneten Steuereinheit verwendeten Komponenten, mit berücksichtigt werden.

Das hat den Vorteil, dass die vorbestimmte Frequenz auf die konkrete Ausführungsform des Linearaktuators und damit der Spule und des magnetischen Kreises angepasst wird und die Position des beweglichen Elements besonders einfach und zuverlässig bestimmbar ist.

In einer besonders vorteilhaften Ausführungsform ist vorgesehen, dass als vorbestimmte Frequenz für die Wechselgröße eine Frequenz zwischen 10 und 1000Hz, insbesondere zwischen 25 und 200Hz gewählt wird. Besonders bevorzugt sind hier Frequenzen in dem Bereich zwischen 50 und 150 Hz. Das hat den Vorteil, dass in dem besagten Frequenzbereich die Impedanz der Spule besonders signifikanten Veränderungen unterliegt, während in anderen Frequenzbereichen entweder ohmsche Verlust oder Ummagnetisierungsverluste die Impedanz dominieren. Entsprechend verändert sich die zu dem Spulenstrom proportionale Spannung in Abhängigkeit von der Position des beweglichen Elementes bei diesen Frequenzen besonders stark, sodass die Position leicht bestimmt werden kann.

In einer weiteren Ausführungsform ist vorgesehen, dass der Spulenstrom durch die Wechselgröße um einen Wert zwischen 0,1 und 25 Prozent, insbesondere zwischen 1 und 20 Prozent, nochmals bevorzugt um einen Wert zwischen 5 und 15 Prozent, moduliert wird. Ist der Spulenstrom der Spule durch eine gegenüber der vorbestimmten Frequenz höherfrequenten Pulsweitenmodulation zugeführt, so kann dies über eine Modulation des auch als Duty Cycle bezeichneten Tast- oder Aussteuergrades der Pulsweitenmodulation erfolgen. Das hat den Vorteil, dass die Wechselspannung groß genug für ein einfaches Ermitteln eines zu dem Spulenstrom proportionalen Spannung bei dieser vorbestimmten Frequenz der Wechselspannung ist, gleichzeitig jedoch das Halten und/oder Bewegen des beweglichen Elementes durch die Wechselspannung nicht beeinflusst wird.

In einer vorteilhaften Ausführungsform ist vorgesehen, dass die weitere, insbesondere elektrische, Größe mit einer Abtastfrequenz oder Zeitscheibe von weniger als 1000 Hz geregelt wird, insbesondere mit einer Abtastfrequenz von weniger als 250 Hz. Insbesondere wird in diesem Fall die vorbestimmte Frequenz unterhalb der Nyquist-Grenze der Abtastfrequenz gewählt. Das hat den Vorteil, dass das Verfahren beispielsweise auch über einen Regelkreis, der in günstigen und robusten Komponenten, z.B. Mikrocontrollern, realisiert ist, durchgeführt werden kann. Gerade bei solch einem Regelkreis ist eine derartige, im Vergleich zu der höherfrequenten Pulsweitenmodulation langsame, Abtastfrequenz üblicherweise bereits vorhanden. Es können so auch Einflüsse der höherfrequenten Pulsweitenmodulation besonders leicht und kostengünstig durch eine Tiefpassfilterung ausgefiltert werden. Insbesondere kann so das Verfahren in einem gegebenenfalls bereits vorliegenden Regelkreis mittels einer einfachen Soft- oder Firmwareanpassung realisiert werden.

Es ist vorgesehen, dass die Impedanz bei der vorbestimmten Frequenz gemäß dem Wirkprinzip eines Korrelations-Verstärkers ermittelt wird. Insbesondere kann dies natürlich direkt durch einen Korrelations-Verstärker erfolgen. Am einfachsten kann dies durch eine Multiplikation und eine Mittelung realisiert werden. Das hat den Vorteil, dass die Impedanz bei der vorbestimmten Frequenz besonders genau ermittelt werden kann und in Folge auch Veränderungen in der Impedanz, welche eine Veränderung der Position des beweglichen Elementes repräsentieren, besonders genau gemessen werden können. Es kann also auf einfache Weise die Position des beweglichen Elementes besonders genau bestimmt werden.

Gemäß einer weiteren Ausführungsform wird die Position des beweglichen Elementes aus einer Phase und/oder einem Imaginärteil und/oder einem Betrag und/oder einem Realteil der Impedanz bei der vorbestimmten Frequenz bestimmt. Da in Abhängigkeit der konkreten Ausführungsform des Linearaktuators und der verwendeten Elektronikkomponenten Phase, Imaginärteil und Betrag besonders stark von der Position des beweglichen Elements abhängen, kann die Position des beweglichen Elementes so besonders einfach gemessen werden. Bei einer kleinen Phase, beispielsweise von 30° oder weniger, lässt sich der Betrag der Impedanz mit einer ausreichenden Genauigkeit aus dem Realteil ableiten, sodass dann auch der Realteil der Impedanz geeignet für das Messen der Position des beweglichen Elements ist.

In einer besonders vorteilhaften Ausführungsform ist vorgesehen, dass das Ermitteln der Position des beweglichen Elementes aus der Impedanz ein Tiefpassfiltern eines Signals umfasst, insbesondere durch einen einfachen Rechteckfilter oder Blockfilter, also über eine Rechteck-Filterfunktion. Wird im Rahmen des Verfahrens ein Korrelations- oder Lock-In-Verstärker genutzt, so kann der Blockfilter insbesondere der zugehörige Tiefpassfilter sein. Ein Blockfilter entspricht hier einem sogenannten Boxcar-Filter, welcher eine bestimmte Anzahl von Messwerten gleichgewichtet aufaddiert. Das hat den Vorteil, dass der Einfluss der Position des beweglichen Elementes auf die gefilterte proportionale Spannung oder einen von dieser abhängigen Wert verstärkt wird und das resultierende tiefpassgefilterte Signal einfacher auszuwerten ist.

Insbesondere kann hier vorgesehen sein, dass die Anzahl der Werte, über welche in dem Blockfilter jeweils gemittelt wird, gleich einem ganzzahligen Vielfachen des Quotienten von einer Abtastfrequenz für die weitere, insbesondere elektrische, Größe und der vorbestimmten Frequenz der Wechselgröße gewählt wird. Arbeitet beispielsweise ein Regelkreis für den Spulenstrom z.B. mit einer Abtastfrequenz von 200 Hz und die vorbestimmte Frequenz der elektrischen Wechselgröße beträgt 50 Hz, so wird über vielfache Werte von 4, also z.B. über 4, 8, 12 oder 16 Werte gemittelt. In dieser Ausführungsform werden insbesondere die vorbestimmte Frequenz der Wechselgröße und die Abtastfrequenz so gewählt, dass der Quotient ganzzahlig ist. Das hat den Vorteil, dass ein Leckeffekt oder Randeffekt des Blockfilters, welcher als sogenannte spectral leakage das gefilterte Signal verschmiert und ein Bestimmen der Position des beweglichen Elementes aus der ermittelten Impedanz erschweren kann, vermieden werden.

Die Erfindung umfasst auch einen für ein Kraftfahrzeug bestimmten Linearaktuator. Dieser weist eine elektrische Spule, ein bewegliches Element, welches mittels eines Magnetfeldes der Spule des Linearaktuators bewegbar ist und eine Steuereinheit, welche ausgelegt ist, eine Position eines beweglichen Elementes relativ zu der Spule basierend auf einer Veränderung der Impedanz der Spule, zu bestimmen, auf. Dabei ist die Steuereinheit ausgelegt, einen der Spule für ein Bewegen und/oder Halten des beweglichen Elementes zugeführten Spulenstrom mit einer elektrischen Wechselgröße vorbestimmter Frequenz zu modulieren, eine Impedanz bei der vorbestimmten Frequenz durch ein Messen einer weiteren Größe, insbesondere einer weiteren elektrischen Größe, zu ermitteln, sowie die Position des beweglichen Elementes aus der ermittelten Impedanz zu bestimmen. Die Steuereinheit kann hier insbesondere einen Regelkreis mit einem Proportional-Integralregler umfassen, um der Spule den Spulenstrom zuzuführen. Vorteile und vorteilhafte Ausführungsformen entsprechen hier den Vorteilen und vorteilhaften Ausführungsformen des Verfahrens.

In weiteren vorteilhaften Ausführungsformen umfasst die Erfindung auch ein Kraftfahrzeug oder ein Kraftfahrzeuggetriebe mit einem solchen Linearaktuator.

Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert.

Es zeigen:
- Fig. 1: eine schematische Schnittdarstellung einer beispielhaften Ausführungsform eines Linearaktuators mit einem ausgefahrenen beweglichen Element;
- Fig. 2: eine schematische Schnittdarstellung des Linearaktuators von Fig. 1 mit einem eingefahrenen beweglichen Element; sowie
- Fig. 3: ein Blockdiagramm einer Schaltung, welche eine beispielhafte Ausführungsform des Verfahrens umsetzt.

In den Figuren werden gleiche oder funktionsgleiche Elemente mit den gleichen Bezugszeichen versehen.

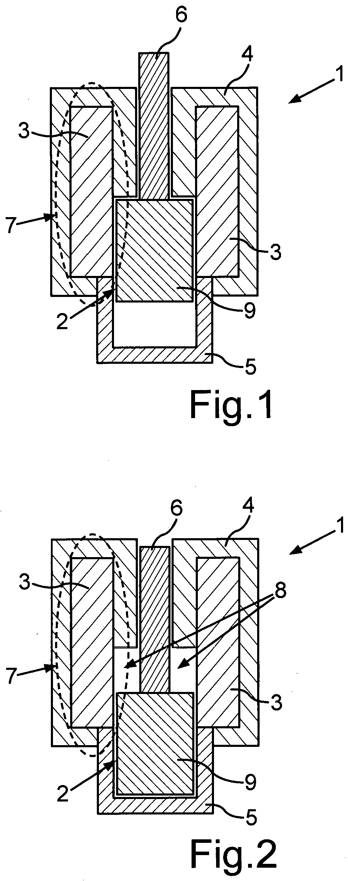

Fig. 1 zeigt eine Schnittdarstellung einer beispielhaften Ausführungsform eines Linearaktuators mit einem ausgefahren beweglichen Element. Der Linearaktuator 1 ist dabei vorliegend als eine Verriegelungseinrichtung ausgeführt. Ein bewegliches Element 2, hier ein Verriegelungselement, ist dabei zumindest bereichsweise im Inneren einer Spule 3 angeordnet. Es hat vorliegend die Form eines Zylinders mit, beispielsweise zwei, Bereichen unterschiedlicher magnetischer Permeabilität und vorliegend auch unterschiedlichen Durchmessers. Ein erster Bereich 6 des beweglichen Elementes 2, hier mit einem geringeren Durchmesser, ist aus einem unmagnetischen Material mit einer Permeabilität µ=1, und ein zweiter Bereich 9 des beweglichen Elementes 2, hier mit einem größeren Durchmesser, aus einem magnetischen Material mit einer Permeabilität µ>1. Im dargestellten Beispiel sind an den beiden Enden der zylinderförmigen Spule 3 jeweils ein erstes Anschlagelement 4 und ein zweites Anschlagelement 5 angeordnet. Das bewegliche Element 2 liegt vorliegend an dem ersten Anschlagelement 4 an und steht mit dem ersten Bereich 6 über dieses hervor. Der hervorstehende Endbereich 6 des beweglichen Elementes 2 kann hier für ein Verriegeln verwendet werden. Eine gegebenenfalls erforderliche oder zweckmäßige Rückholfeder ist aus Gründen der Übersichtlichkeit nicht dargestellt.

Das erste Anschlagelement 4 erstreckt sich in dem gezeigten Beispiel außen um die Spule und bereichsweise ins Innere der Spule 3 wobei der verbleibende Innenraum der Spule 3 in der gezeigten Anordnung von dem beweglichen Element 2 eingenommen wird. Entsprechend erstreckt sich ein magnetischer Kreis 7 im Inneren der Spule 3 vorliegend durch das erste Anschlagelement 4 und den zweiten Bereich 9 des beweglichen Elements 2. Die Impedanz oder Induktivität der Spule 3 wird entsprechend in diesem Beispiel bei einem ausgefahrenen beweglichen Element 2 durch die Materialien des ersten Anschlagelements 4 und des zweiten Bereichs 9 des beweglichen Elements 2 bestimmt.

Fig. 2 zeigt eine Schnittdarstellung des in Fig. 1 dargestellten Linearaktuators mit einem eingefahrenen beweglichen Element. Der erste Bereich 6 des beweglichen Elementes steht nun nicht mehr über das erste Anschlagelement 4 hinaus und der zweite Bereich 9 des beweglichen Elements 2 befindet sich im Anschlag mit dem zweiten Anschlagelement 5, welches hier an der dem ersten Anschlagelement 4 gegenüberliegenden Spulenseite angeordnet ist. Entsprechend liegt vorliegend nun an der Innenseite der Spule 3 zwischen dem ersten Anschlagelement 4 und dem zweiten Bereich 9 des beweglichen Elements 2 ein Luft- oder Ölspalt 8 vor. Dieser erstreckt sich zumindest teilweise auch in den Bereich des magnetischen Kreises 7 der Spule 3. Da der magnetische zweite Bereich 9 des beweglichen Elements 2 das erste Anschlagelement 4 nicht mehr berührt, wird die Impedanz oder Induktivität der Spule 3 nun nicht mehr nur von den Materialien des ersten Anschlagelements 4 und des beweglichen Elementes 2 sondern auch von dem Luft- oder Ölspalt 8, vor allem dessen Größenabmessung beeinflusst. Eine Veränderung der Impedanz oder Induktivität der Spule 3 entspricht also in dem gezeigten Beispiel einem Verändern der Position des beweglichen Elementes 2, so dass aus einer gemessenen Impedanz oder Induktivität die Position des beweglichen Elementes 2 bestimmt werden kann.

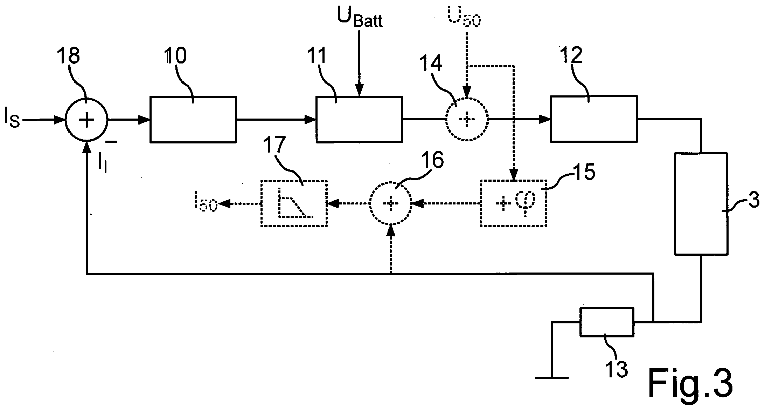

Fig. 3 zeigt ein Blockdiagramm einer elektronischen Schaltung, welche eine beispielhafte Ausführungsform des Verfahrens umsetzt. Die mit durchgezogenen Strichen dargestellten Komponenten entsprechen hier einem bekannten Stand der Technik, welcher um die gestrichelt dargestellten Komponenten und entsprechende Verarbeitungsschritte ergänzt wurde.

Die mit durchgezogenen Strichen dargestellten Komponenten und Verarbeitungsschritte bilden im Wesentlichen einen Standard-Regelkreis. Einem Regler 10, der beispielsweise als PI-Regler ausgeführt ist, wird hier als Führungsgröße die Abweichung von einem Soll-Spulenstrom **I**ₛ in Form eines Führungssignals vorgegeben, mit dem ein Magnetfeld zum Bewegen und/oder Halten eines beweglichen Elementes 2 (Fig. 1 und 2) in einer Spule 3 bewirkt wird. In einer weiteren Komponente 11 des Regelkreises wird eine Störgröße, in diesem Fall die Batteriespannung U_{Batt} in dem Regelkreis kompensiert. In der weiteren Komponente 11 wird also vorliegend eine sogenannte Vorwärtskorrektur, eine forward correction, durchgeführt, wobei in dieser auch weitere Verarbeitungsschritte erfolgen können. Zwischen der Spule 3, deren Spulenstrom durch den Regelkreis geregelt wird und der weiteren Komponente 11 ist in der vorliegenden Ausführungsform eine Steuerkomponente 12 Teil des Regelkreises, welche hier unter Verwendung einer Pulsweitenmodulation über eine mittlere Spannung einen Spulenstrom auf die Spule 3 prägt. Der tatsächliche Ist-Spulenstrom I_{I} wird in dem Regelkreis als Regelgröße rückgeführt. Dies erfolgt hier durch ein Ermitteln einer zu dem Ist-Spulenstrom I_{I} proportionalen Spannung, welche an einem geerdeten Messwiderstand 13 abgegriffen wird und über eine Additionskomponente 18 von dem Führungssignal des Regelkreises abgezogen.

Zum Bestimmen der Position des beweglichen Elementes wird in einem weiteren Additionsglied 14, welches vorliegend zwischen der weiteren Komponente 11 und der Steuerkomponente 12 in den Regelkreis integriert ist, durch eine Wechselspannung mit einer vorbestimmten Frequenz, im gezeigten Beispiel 50Hz, ein Modulationsgrad der Pulsweitenmodulation modifiziert. Der Spulenstrom wird also in Folge der Wechselspannung mit der vorbestimmten Frequenz moduliert. In der dargestellten Ausführungsform erfolgt das Ermitteln der zu dem Spulenstrom proportionalen Spannung bei der vorbestimmten Frequenz, also bei 50Hz, wie im Folgenden beschrieben nach dem Prinzip des Korrelations-Verstärkers:
Die Wechselspannung U₅₀ wird nicht nur genutzt, um den Modulationsgrad der Pulsweitenmodulation zu modifizieren, sondern auch die zu dem Spulenstrom proportionale Spannung bei der vorbestimmten Frequenz zu demodulieren. Dafür wird die Wechselspannung U₅₀ in diesem Beispiel zunächst in einer Phasenverschiebungskomponente 15 um eine vorbestimmte Phase, beispielsweise 45 Grad, verschoben. Die Phasenverschiebungskomponente 15 kann hier, da die vorbestimmte Frequenz bekannt und konstant ist, als ein einfaches Zeitverzögerungsglied ausgeführt sein. In einer Mischkomponente 16, beispielsweise als sogenannter Mischer ausgeführt, wird nun die zu dem Ist-Spulenstrom Iₗ proportionale Spannung mit der phasenverschobenen Wechselspannung U₅₀ demoduliert, z.B. durch eine Multiplikation. Auf das Demodulieren oder die Multiplikation folgt hier ein Tiefpassfiltern in einer Filterkomponente 17, welche vorliegend als einfacher Blockfilter oder Rechteckfilter beziehungsweise sogenannter Boxcar-Filter ausgebildet ist. Die Anzahl der Messwerte, über welche im vorliegenden Fall in der Filterkomponente 17 gemittelt wird, beträgt vorliegend 16. Die Anzahl ist so gewählt, da die Abtastrate beziehungsweise Zeitscheibe des Reglers 10 in diesem Beispiel 200Hz beträgt und die vorbestimmte Frequenz 50Hz sowie die Wahl eines ganzzahligen Vielfachen des Quotienten von Abtastrate und vorbestimmter Frequenz für die Anzahl der Messwerte den Vorteil mit sich bringt, dass störende Leckeffekte des Tiefpassfilters minimiert werden. Als Resultat wird die zu dem Ist-Spulenstrom I_{I} proportionale Spannung bei der vorbestimmten Frequenz der Wechselspannung U₅₀ ermittelt. Dies entspricht einem Bestimmen des Anteils I₅₀ des Ist-Spulenstroms I_{I}, welcher auf die beaufschlagte Wechselspannung U₅₀ zurückzuführen ist, und damit dem Bestimmen der Impedanz der Spule 3 und der Position des beweglichen Elements 2 (Figs. 1 und 2). Aus dem Betrag der proportionale Spannung bei der vorbestimmten Frequenz, hier 50Hz, und damit des Anteils I₅₀ des Ist-Spulenstroms I_{I}, kann somit die Position des beweglichen Elementes bestimmt werden, beispielsweise durch ein Vergleichen mit einem jeweiligen Vergleichswert, welcher dann eine bekannte Position des beweglichen Elementes repräsentiert.

## Patentansprüche

1. Verfahren zum Betreiben einer Parksperre eines Kraftfahrzeuggetriebes, wobei die Parksperre einen Linearaktuator (1) als Verriegelungseinrichtung mit einem beweglichen Element (2) als Verriegelungselement aufweist, mit einem Bestimmen einer Position des beweglichen Elementes (2) des Linearaktuators (1), wobei das bewegliche Element (2) mittels eines Magnetfelds einer Spule (3) des Linearaktuators (1) bewegbar ist und das Bestimmen der Position des beweglichen Elementes (2) basierend auf einer Veränderung einer Impedanz oder einer Admittanz der Spule (3) erfolgt,
aufweisend die Schritte:
- Modulieren eines der Spule (3) für ein Bewegen und/oder Halten des beweglichen Elementes (2) zugeführten Spulenstroms mit einer elektrischen Wechselspannung (U₅₀) vorbestimmter und konstanter Frequenz;
- Ermitteln der Impedanz oder der Admittanz der Spule bei der vorbestimmten Frequenz durch ein Messen eines auf die Wechselspannung zurückzuführenden Stroms bei der vorbestimmten Frequenz, wobei die Impedanz aus der elektrischen Wechselspannung und dem Strom bei der vorbestimmten und konstanten Frequenz gemäß dem Wirkprinzip eines Korrelationsverstärkers ermittelt wird, indem eine zu dem Spulenstrom proportionale Spannung mit der Wechselspannung, die um eine vorbestimmte Phase verschoben ist, demoduliert wird,
- Bestimmen der Position des beweglichen Elements (2) aus der ermittelten Impedanz oder Admittanz.

2. Verfahren nach einem der vorhergehenden Ansprüche,
**dadurch gekennzeichnet, dass**
die vorbestimmte Frequenz in Abhängigkeit von der konkreten Ausführungsform des Linearaktuators (1) vorgegeben wird, und zwar indem der Unterschied der Impedanz der Spule (3) für unterschiedliche Positionen des beweglichen Elementes (2) bei verschiedenen Frequenzen bestimmt wird und eine Frequenz mit einem größtmöglichen Unterschied der Impedanz in den unterschiedlichen Positionen des beweglichen Elements (2) als vorbestimmte Frequenz vorgegeben wird.

3. Verfahren nach einem der vorhergehenden Ansprüche,
**dadurch gekennzeichnet, dass**
als vorbestimmte Frequenz für die Wechselspannung (U₅₀) eine Frequenz zwischen 10 Hz und 1000 Hz, insbesondere zwischen 25 und 200 Hz, besonders bevorzugt zwischen 50 Hz und 150 Hz gewählt wird.

4. Verfahren nach einem der vorhergehenden Ansprüche,
**dadurch gekennzeichnet, dass**
der Spulenstrom durch die Wechselspannung (U₅₀) um einen Wert zwischen 0,1 Prozent und 25 Prozent, insbesondere zwischen 1 Prozent und 20 Prozent, besonders bevorzugt zwischen 5 und 15 Prozent moduliert wird.

5. Verfahren nach einem der vorhergehenden Ansprüche,
**dadurch gekennzeichnet, dass**
der Strom mit einer Abtastfrequenz von weniger als 1000 Hz geregelt wird, insbesondere mit einer Abtastfrequenz von weniger als 250 Hz.

6. Verfahren nach einem der vorhergehenden Ansprüche,
**dadurch gekennzeichnet, dass**
die Position des beweglichen Elements (2) aus einer Phase und/oder einem Imaginärteil und/oder einem Betrag und/oder einem Realteil der Impedanz bei der vorbestimmten Frequenz bestimmt wird.

7. Verfahren nach einem der vorhergehenden Ansprüche,
**dadurch gekennzeichnet, dass**
das Ermitteln der Impedanz ein Tiefpass-Filtern, insbesondere durch einen Rechteckfilter umfasst.

8. Verfahren nach Anspruch 7,
**dadurch gekennzeichnet, dass**
die Anzahl der Werte, über welche in dem Blockfilter jeweils gemittelt wird, gleich einem ganzzahligen Vielfachen des Quotienten von einer Abtastfrequenz für den Strom und der vorbestimmten Frequenz der Wechselspannung (U₅₀) gewählt wird.

9. Parksperre für ein Kraftfahrzeuggetriebe, umfassend einen Linearaktuator (1) als Verriegelungseinrichtung mit
- einer elektrischen Spule (3);
- einem beweglichen Element (2) als Verriegelungselement, welches mittels eines Magnetfelds der Spule (3) des Linearaktuators (1) bewegbar ist; und
- einer Steuereinheit, welche ausgelegt ist eine Position des beweglichen Elementes (2) basierend auf einer Veränderung einer Impedanz oder einer Admittanz der Spule (3) zu bestimmen,
wobei
die Steuereinheit ausgelegt ist,
- einen der Spule (3) für ein Bewegen und/oder Halten des beweglichen Elementes (2) zugeführten Spulenstrom mit einer elektrischen Wechselspannung (U₅₀) vorbestimmter und konstanter Frequenz zu modulieren, sowie
- die Impedanz oder die Admittanz bei der vorbestimmten Frequenz durch Messen eines auf die Wechselspannung zurückzuführenden Stroms bei der vorbestimmten Frequenz zu ermitteln, wobei die Impedanz aus der elektrischen Wechselspannung und dem Strom bei der vorbestimmten und konstanten Frequenz gemäß dem Wirkprinzip eines Korrelationsverstärkers ermittelt wird, indem eine zu dem Spulenstrom proportionale Spannung mit der Wechselspannung, die um eine vorbestimmte Phase verschoben ist, demoduliert wird.

10. Kraftfahrzeuggetriebe mit einer Parksperre gemäß Anspruch 9.

## Claims

1. Method for operating a parking lock of a motor vehicle transmission, wherein the parking lock has a linear actuator (1) as locking device having a movable element (2) as locking element, having a determining of a position of the movable element (2) of the linear actuator (1), wherein the movable element (2) is movable by means of a magnetic field of a coil (3) of the linear actuator (1) and the determining of the position of the movable element (2) takes place based on a change in an impedance or an admittance of the coil (3),
having the steps:
- modulating a coil current supplied to the coil (3) for a moving and/or holding of the movable element (2) with an electrical AC voltage (U₅₀) of predetermined and constant frequency;
- calculating the impedance or the admittance of the coil at the predetermined frequency by a measuring of a current attributed to the AC voltage at the predetermined frequency, wherein the impedance is calculated from the electrical AC voltage and the current at the predetermined and constant frequency according to the working principle of a correlation amplifier, in that a voltage proportional to the coil current is demodulated with the AC voltage, which is shifted by a predetermined phase,
- determining the position of the movable element (2) from the calculated impedance or admittance.

2. Method according to any of the preceding claims,
**characterised in that**
the predetermined frequency is prescribed depending on the concrete embodiment of the linear actuator (1), **in that** the difference in the impedance of the coil (3) for different positions of the movable element (2) is determined at different frequencies and a frequency with a greatest possible difference in the impedance in the different positions of the movable element (2) is prescribed as predetermined frequency.

3. Method according to any of the preceding claims,
**characterised in that**
as predetermined frequency for the AC voltage (U₅₀) a frequency is selected of between 10 Hz and 1000 Hz, in particular between 25 and 200 Hz, especially preferably between 50 Hz and 150 Hz.

4. Method according to any of the preceding claims,
**characterised in that**
the coil current is modulated by the AC voltage (U₅₀) by a value between 0.1 percent and 25 percent, particular between 1 percent and 20 percent, especially preferably between 5 and 15 percent.

5. Method according to any of the preceding claims,
**characterised in that**
the current is regulated with a scanning frequency of less than 1000 Hz, in particular with a scanning frequency of less than 250 Hz.

6. Method according to any of the preceding claims,
**characterised in that**
the position of the movable element (2) is determined from a phase and/or an imaginary component and/or an amount and/or a real component of the impedance at the predetermined frequency.

7. Method according to any of the preceding claims,
**characterised in that**
the determining of the impedance comprises a low-pass filtering, in particular through a rectangular filter.

8. Method according to claim 7,
**characterised in that**
the number of the values, over which respectively averaging takes place in the block filter, is selected equal to an integral multiple of the quotient from a scanning frequency for the current and the predetermined frequency of the AC voltage (U₅₀).

9. Parking lock for a motor vehicle transmission, comprising a linear actuator (1) as locking device having
- an electrical coil (3);
- a movable element (2) as locking element, which is movable by means of a magnetic field of the coil (3) of the linear actuator (1); and
- a control unit which is configured to determine a position of the movable element (2) based on a change in an impedance or an admittance of the coil (3),
wherein
the control unit is configured
- to modulate a coil current supplied to the coil (3) for a moving and/or holding of the movable element (2) with an electrical AC voltage (U₅₀) of predetermined and constant frequency, and
- to determine the impedance or the admittance at the predetermined frequency by measuring a current attributed to the AC voltage at the predetermined frequency, wherein the impedance is calculated from the electrical AC voltage and the current at the predetermined and constant frequency according to the working principle of a correlation amplifier, in that a voltage proportional to the coil current is demodulated with the AC voltage, which is shifted by a predetermined phase.

10. Motor vehicle transmission with a parking lock according to claim 9.

## Revendications

1. Procédé de fonctionnement d'un frein de stationnement d'une transmission de véhicule automobile, dans lequel le frein de stationnement comporte un actionneur linéaire (1) comme dispositif de verrouillage avec un élément mobile (2) comme élément de verrouillage, avec une détermination d'une position de l'élément mobile (2) de l'actionneur linéaire (1), dans lequel l'élément mobile (2) peut être déplacé au moyen d'un champ magnétique d'une bobine (3) de l'actionneur linéaire (1) et dans lequel la détermination de la position de l'élément mobile (2) s'effectue en se basant sur une variation d'une impédance ou d'une admittance de la bobine (3),
comportant les étapes :
- modulation d'un courant de bobine, envoyé à la bobine (3) pour un déplacement et/ou un maintien de l'élément mobile (2), avec une tension électrique alternative (U₅₀) de fréquence prédéterminée et constante ;
- détermination de l'impédance ou de l'admittance de la bobine pour la fréquence prédéterminée par une mesure d'un courant à ramener à la tension alternative pour la fréquence prédéterminée, laquelle impédance est déterminée à partir de la tension électrique alternative et du courant pour la fréquence prédéterminée et constante selon le principe d'action d'un amplificateur de corrélation en démodulant une tension, proportionnelle au courant de bobine, avec la tension alternative qui est décalée d'une phase prédéterminée,
- détermination de la position de l'élément mobile (2) à partir de l'impédance ou admittance déterminée.

2. Procédé selon l'une quelconque des revendications précédentes,
**caractérisé en ce que**
la fréquence prédéterminée est prescrite en fonction de la forme de réalisation concrète de l'actionneur linéaire (1), et ce en déterminant la différence de l'impédance de la bobine (3) pour différentes positions de l'élément mobile (2) pour différentes fréquences et en prescrivant une fréquence avec une différence maximale de l'impédance dans les différentes positions de l'élément mobile (2) comme fréquence prédéterminée.

3. Procédé selon l'une quelconque des revendications précédentes,
**caractérisé en ce que**,
comme fréquence prédéterminée pour la tension alternative (U₅₀), on choisit une fréquence entre 10 Hz et 1 000 Hz, en particulier entre 25 Hz et 200 Hz, de manière particulièrement préférée entre 50 Hz et 150 Hz.

4. Procédé selon l'une quelconque des revendications précédentes,
**caractérisé en ce que**
le courant de bobine est modulé, par la tension alternative (U₅₀), d'une valeur entre 0,1 % et 25 %, en particulier entre 1 % et 20 %, de manière particulièrement préférée entre 5 et 15 %.

5. Procédé selon l'une quelconque des revendications précédentes,
**caractérisé en ce que**
le courant est réglé avec une fréquence d'échantillonnage de moins de 1 000 Hz, en particulier avec une fréquence d'échantillonnage de moins de 250 Hz.

6. Procédé selon l'une quelconque des revendications précédentes,
**caractérisé en ce que**
la position de l'élément mobile (2) est déterminée à partir d'une phase et/ou d'une partie imaginaire et/ou d'une valeur absolue et/ou d'une partie réelle de l'impédance pour la fréquence prédéterminée.

7. Procédé selon l'une quelconque des revendications précédentes,
**caractérisé en ce que**
la détermination de l'impédance comprend un filtrage passe-bas, en particulier par un filtre de caractéristique rectangulaire.

8. Procédé selon la revendication 7,
**caractérisé en ce que**
le nombre des valeurs sur lesquelles est effectuée à chaque fois une moyenne dans le filtre bloc est choisi égal à un multiple entier du quotient d'une fréquence d'échantillonnage pour le courant et de la fréquence prédéterminée de la tension alternative (U₅₀).

9. Frein de stationnement pour une transmission de véhicule automobile, comprenant un actionneur linéaire (1) comme dispositif de verrouillage avec
- une bobine électrique (3) ;
- un élément mobile (2) comme élément de verrouillage qui peut être déplacé au moyen d'un champ magnétique de la bobine (3) de l'actionneur linéaire (1) ; et
- une unité de commande qui est conçue pour déterminer une position de l'élément mobile (2) en se basant sur une variation d'une impédance ou d'une admittance de la bobine (3),
dans lequel l'unité de commande est conçue
- pour moduler un courant de bobine, envoyé à la bobine (3) pour un déplacement et/ou un maintien de l'élément mobile (2), avec une tension électrique alternative (U₅₀) de fréquence prédéterminée et constante, ainsi que
- pour déterminer l'impédance ou l'admittance pour la fréquence prédéterminée par une mesure d'un courant à ramener à la tension alternative pour la fréquence prédéterminée, laquelle impédance est déterminée à partir de la tension électrique alternative et du courant pour la fréquence prédéterminée et constante selon le principe d'action d'un amplificateur de corrélation en démodulant une tension, proportionnelle au courant de bobine, avec la tension alternative qui est décalée d'une phase prédéterminée.

10. Transmission de véhicule automobile avec un frein de stationnement selon la revendication 9.
